# EUROPEAN PATENT APPLICATION

(11) **EP 3 644 269 A1**
(43) Date of publication of application: **29.04.2020**
(21) Application number: 19199948.1
(22) Date of filing: 26.09.2019
(51) Int. Cl.: G06Q 50/30, G06Q 10/08, G06Q 50/28

(54) **TRANSPORT SYSTEM AND METHOD WITH CLIENT ASSISTANCE TO HAND-DELIVER A PACKAGE**

(30) Priority: 26.10.2018 US 201862751070 P; 29.10.2018 US 201816173728
(71) Applicant: Aptiv Technologies Limited, St. Michael (BB)
(72) Inventor: Hedges, Christopher A., Greentown, IN Indiana 46936 (US)
(74) Representative: Manitz Finsterwald Patent- und Rechtsanwaltspartnerschaft mbB

(57) **Abstract**

A transport system (10) includes vehicle-controls (18) for automated-control of a host-vehicle (12), a communication-device (20) to receive destinations (22) for the host-vehicle (12) and convey fees to a client (16), and a controller-circuit (30) in communication with the vehicle-controls (18) and the communication-device (20). The controller-circuit (30) is configured to receive a first-destination (22A) of a package (14), receive a second-destination (22B) of the client (16), convey a base-fee (40) to the client (16) for transportation to the second-destination (22B) without stopping at the first-destination (22A), convey a reduced-fee (42) to the client (16) for transportation to the second-destination (22B) that includes stopping proximate to the first-destination (22A) and the client (16) delivering the package (14) to the first-destination (22A). If the client (16) agrees, the system (10) operates the vehicle-controls (18) of the host-vehicle (12) to transport the client (16) and stop at a location (58) proximate to the first-destination (22A), then wait while the client (16) hand-delivers the package (14) to the first-destination (22A), and then transport the client (16) to the second-destination (22B).

## Description

### TECHNICAL FIELD OF INVENTION

This disclosure generally relates to a client and package transport system, and more particularly relates to offering a client a reduced transportation fee in exchange for the client hand-delivering a package.

### BRIEF DESCRIPTION OF DRAWINGS

The present invention will now be described, by way of example with reference to the accompanying drawings, in which:
Fig. 1 is a diagram of a system for operating a host-vehicle in accordance with one embodiment; and

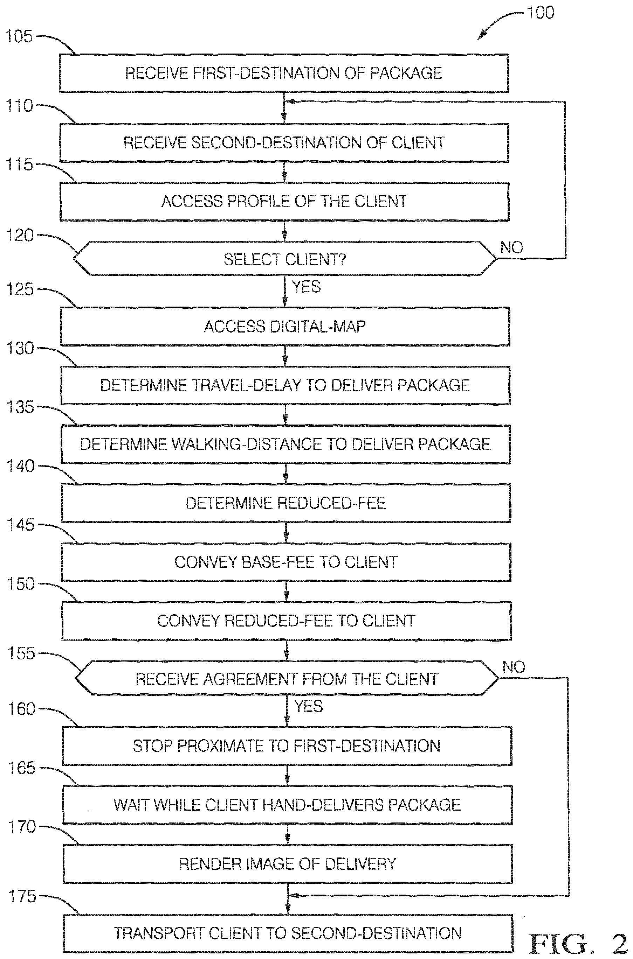

Fig. 2 is a method of operating the system of Fig. 1 in accordance with one embodiment.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

'One or more' includes a function being performed by one element, a function being performed by more than one element, e.g., in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for describing embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

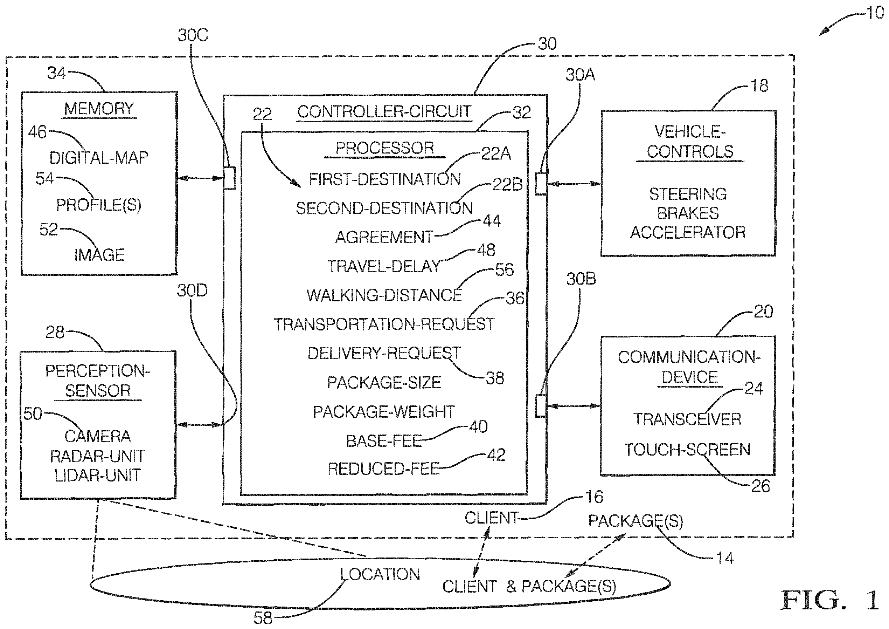

Fig. 1 illustrates a non-limiting example of a transport system 10, hereafter often referred to as the system 10, that autonomously operates a host-vehicle 12 to deliver or transport one or more instances of a package 14 and one or more instances of a client 16 to their respective destinations 22. As will be explained in more detail below, the system 10 provides incentives to the client 16 in exchange for the client 16 assisting with hand-delivering the package 14. The host-vehicle 12 may be characterized as an automated vehicle, and may be referred to by some as an automated-mobility-on-demand (AMOD) type of vehicle. As used herein, the term automated vehicle may apply to instances when the host-vehicle 12 is being operated in an automated-mode, i.e. a fully autonomous mode, where the client 16 or a human-operator (not shown, but different from the client 16) of the host-vehicle 12 may do little more than designate a destination to operate the host-vehicle 12. However, full automation is not a requirement. It is contemplated that the teachings presented herein are useful when the host-vehicle 12 is operated in a manual-mode by a human-operator.

The system 10 includes vehicle-controls 18 operable for automated-control or autonomous-control of the host-vehicle 12. As will be recognized by those in automated-vehicle arts, the devices and/or means for computer controlled operation of the steering, brakes, and accelerator of the host-vehicle 12 are well-known and commercially available. It is recognized that some embodiments of the host-vehicle 12 may not have controls that are operable by a human-operator. That is, the host-vehicle 12 may not be equipped with a hand-wheel operable by a human-operator to influence the steering of the host-vehicle, or a brake-pedal or an accelerator-pedal operable by a human-operator to influence the speed of the host-vehicle 12.

The system 10 includes a communication-device 20 operable (by a computer or the like) to receive the destinations 22 for the host-vehicle 12 and convey fees, i.e. transportation fees or transportation fares, to the client 16. The communication-device 20 may include or consist of, but is not limited to, a transceiver 24 configured for Wi-Fi and/or Bluetooth and/or cellular network communications, or any combination thereof. For example, the host-vehicle 12 may be dispatched using cellular communications, and the client 16 may use a smart phone to communicate with the host-vehicle 12 via Bluetooth. The communication-device 20 may also include or consist of, but is not limited to, a touch-screen 26 operable to display information to the client 16 and/or receive input from the client 16, a microphone configured to detect voice commands from the client 16, a speaker configured to emit voice messages to the client 16, or any combination thereof.

The system 10 may also include a perception-sensor 28 that may include or consist of, but is not limited to, a camera, a radar-unit, a lidar-unit, or any combination thereof. As those in the automated vehicle arts will recognized, the perception-sensor 28 is typically used by a system autonomously operating the host-vehicle 12 to detect roadway boundaries such as lane-markings, curbs, and/or guardrails, and may also be used to detect objects such as other-vehicles, traffic-signals, and/or road-signs.

The system 10 includes a controller-circuit 30 in communication with the vehicle-controls 18 via a first-port 30A, the communication-device 20 via a second-port 30B. The controller-circuit 30, hereafter sometimes referred to as the controller 30, may include one or more instances of a processor 32 such as one or more instances of a microprocessor or other control circuitry such as analog and/or digital control circuitry including an application specific integrated circuit (ASIC) for processing data as should be evident to those in the art. While the system 10 described herein is generally described in terms of having a single instance of the controller 30, it is recognized that the functions of the controller 30 may be shared or distributed among several instances of controllers that are each configured for some specific task.

Hereafter, any reference to the controller 30 being configured for something is to also be interpreted as suggesting that the processor 32 may also be configured for the same thing. It is also recognized that there may be multiple instances of processors in any instance of the controller 30. The controller 30 may include memory 34, i.e. non-transitory computer-readable storage-medium, including non-volatile memory, such as electrically erasable programmable read-only memory (EEPROM) for storing one or more routines, thresholds, and captured data. The memory 34 may be part of the processor 32, or part of the controller 30, or separate from the controller 30 such as remote memory stored in the cloud. The one or more routines may be executed by the controller 30 or the processor 32 to perform steps for determining a route to the destinations 22 based on signals received by the controller 30 as will be described in more detail below.

The controller-circuit 30 (or the processor 32) is configured to, e.g. programmed to, receive using or via the communication-device 20 a first-destination 22A of the package 14. The first-destination 22A may be, for example but not limited to, a street address of a residence or business, or a delivery-service drop-box where a recipient of the package 14 may later retrieve the package 14. A problem with using autonomous vehicles to deliver packages is that the vehicle by itself is often unable to travel the last few meters or few tens of meters to complete the delivery. That is, for example, the autonomous vehicle can 'drive' to a driveway or curbside of a destination address, but is unable to actually deliver, i.e. transfer or move, the package from within the autonomous vehicle to a inside the business or to a door-step of a residence. The system 10 described herein overcomes this problem by employing or incentivizing the client 16 to complete the delivery of the package 14, as will be described in further detail below.

The controller-circuit 30 (or the processor 32) is also configured to, e.g. programmed to, receive using the communication-device 20, a second-destination 22B of the client 16. It should be understood that the client 16 is not an employee of a delivery service, but rather is a person seeking to purchase or secure transportation to the second-destination 22B, e.g. a home or work-place of the client 16. Accordingly, the client 16 will or expected to be charged a fee or fare for the transportation to the second-destination 22B. It is contemplated that the client 16 and package 14 may board/be loaded onto the host-vehicle 12 at the same place, e.g. a transportation-terminal, or at different places. For example, the client 16 may walk to the transportation-terminal, communicate (via, for example, voice, text-message, keypad) a transportation-request 36 to a transportation/delivery company that manages a fleet of autonomous vehicles and operates a package delivery service. The transportation/delivery company may then coordinate the assigning of the client 16 and the loading of the package 14 into the host-vehicle 12.

Alternatively, if the first-destination 22A of the package 14 is not substantially out of the way with respect to the second-destination 22B of the client 16, the system 10 may try to coordinate the delivery of the package 14 with the travel of the client 16 by loading the package 14 into the host-vehicle 12 and then sending the host-vehicle 12 to pick-up the client 16. Alternatively, the system 10 may receive a delivery-request to pick-up and deliver the package 14, and the client 16 may already be traveling in the host-vehicle 12. In this case, the host-vehicle 12 may stop where the package 14 is waiting to be picked-up, may engage the client 16 to load the package 14 into the host-vehicle 12, and then coordinate the delivery of the package 14, optionally with the assistance of the client 16.

It follows that the controller 30 or the processor 32 operate the communication-device 20 to convey a base-fee 40 to the client 16 that is the payment or fare charged to the client 16 for transportation to the second-destination 22B without first stopping at the first-destination 22A, and to convey a reduced-fee 42 (less than the base-fee 40) to the client 16 for transportation to the second-destination 22B that includes stopping proximate to (e.g. within 75 meters) the first-destination 22A and the client 16 delivering the package 14 to the first-destination 22A. That is, the client 16 is offered a choice of the reduced fee 42 which is less than the base-fee 40 as compensation for accepting the extra travel-time and/or travel-distance to the second-destination 22B and assisting with delivering the package 14, e.g. hand-carrying by the client 16 physically carrying the package 14 (or moving the package 14 using a dolly or similar device if the package 14 is heavy) the last few meters or few tens of meters to the first-destination 22A.

The controller 30 is also configured to receive via the communication-device 20 an agreement 44 from the client 16 to deliver the package 14 in exchange for accepting the reduced-fee 42. In response to receiving the agreement 44, the controller 30 is configured to determine a route and operate the vehicle-controls 18 of the host-vehicle 12 to transport the client 16 and stop at a location 58 proximate to the first-destination 22A, then wait while the client 16 hand-delivers (client may use a cart if necessary) the package 14 to the first-destination 22A, and then transport the client 16 to the second-destination 22B. The route may be determined by accessing a digital-map 46 (2D or 3D model) that may be stored in the memory 34 as suggested in Fig. 1, or may be stored remotely in the cloud and accessed using the transceiver 24.

The amount that the fare is reduced in exchange for the client 16 delivering the package 14, i.e. the difference between the base-fee 40 and the reduced-fee 42, may be determined based on how much time the client 16 is delayed to reach the second-destination 22B by agreeing to hand-deliver the package 14. To estimate that time, the controller 30 is configured to access the digital-map 46 (via the third-port 30C) to determine the base-fee 40 for traveling directly to the second-destination 22B without stopping to deliver the package 14, and determine the reduced-fee 42 in accordance with a travel-delay 48 caused by or resulting from the client 16 delivering the package 14. Factors considered to estimate the travel-delay 48 may include, but are not limited to, extra drive time if route to the first-destination 22A deviates from optimal path to the second-destination 22B, additional time for client 16 to walk to deliver the package 14, any delivery transaction time to, for example, get a signature from the recipient or wait for recipient to answer door, or time to open a self-service locker and place the package 14 within.

Similarly, the fare may be reduced (difference between the base-fee 40 and the reduced-fee 42) by an amount that is based on how far the client 16 must walk to hand-deliver the package 14. To this end, the controller-circuit 30 may be configured to access the digital-map 46 to determine the reduced-fee 42 in accordance with a walking-distance 56 between the first-destination 22A, and where the host-vehicle 12 stops proximate to the first-destination 22A and the client 16 starts to carry the package 14. It is also contemplated that further discounts or reductions in the fare could be applied based on the size and/or weight of the package 14. I.e. an additional fare discount may be offered if the package-size is greater than a size-threshold and/or a package-weight is greater than a weight-threshold.

For reasons of security, the delivery of the package 14 by the client 16 may be recorded. Accordingly, the system 10 may include a camera 50 mounted on the host-vehicle 12 (could be part of the perception-sensor 28) and/or a camera (not shown) that is part of infrastructure, e.g. a building security camera. The camera 50 may be operable via a fourth-port 30D to render an image 52 of the client 16 while the client 16 hand-delivers the package 14, and the controller-circuit 30 may be configured to store the image 52 in the memory 34. It is contemplated that the camera used to observe/record the delivery by the client 16 may be steerable to change the aim-direction of the camera, and/or may have a variable-zoom feature. Other means for providing security to the delivery process may include, but are not limited to, having the recipient sign for the package 14, having the recipient use a phone app to take picture of a QR code on the package 14 to confirm receipt, having the client 16 take a picture of package 14 on doorstep with a phone app, having the client 16 place the package 14 into self-service locker, using a locker-based camera as a means of verification of delivery, having the client 16 enter a pin from phone app to open locker, a camera at the locker verifies shipping label, using face recognition at the locker to verify the presence of the client 16, using an RFID tag reader in the locker to verify that the package 14 is delivered.

It is contemplated that some people/clients may be quite willing to deliver a package, while others, for a variety of reasons, may not want to deliver a package. In order to speed the acquisition/identification of a person willing to deliver the package, the system 10 may include a profile 54 of the client 16 that may be stored in the memory 34 and accessed via the third-port. The profile 54 may be configured to indicate that the client 16 has previously agreed to hand-deliver packages, and/or has indicated a willingness to do so in the future by, for example, answering one or more survey questions. The controller-circuit 30 (or the processor 32) may be configured to select the client 16 from a group of potential clients when the client 16 has submitted a transportation-request 36, the profile 54 indicates that the client 16 is willing to deliver packages, and one or more instances of the package 14 are ready or available for delivery. The one or more packages may already be in the host-vehicle 12 prior to picking up the client 16, or the client 16 and the one or more packages may be loaded at the same place, or the host-vehicle 12 stops to pick-up the one or more packages after picking up the client 16. It is also contemplated that further fare discounts may be offered for multiple deliveries, i.e. the reduced-fee is based on the aggregate of individual fare reductions.

Fig. 3 illustrates a non-limiting example of a method 100 of operating the transport system 10. Some of the steps are optional and may or may not be specifically identified as optional below, and the order of some of the steps could be rearranged but achieve the same result of the method 100 described herein.

Step 105, RECEIVE FIRST-DESTINATION OF PACKAGE, may include receiving a first-destination 22A of a package 14. The first-destination 22A may be received/determined/discerned by a person, for example either the sender or a shipping employee, entering information into a device such as a computer or a smart-phone, or by a computer 'reading' a mailing label or bar-code on the package 14. The first-destination 22A may indicate an address rather than a specific spot (e.g. GPS coordinates) on the earth. It is understood that there may be multiple options regarding exactly where the package 14 will be delivered, placed on a door-step, or placed inside an entry area of a building, or handed to a receptionist at a business, for example.

Step 110, RECEIVE SECOND-DESTINATION OF CLIENT, may include receiving a second-destination 22B of a client 16. As used herein, the use of the word "second" is only to distinguish that destination from the first-destination 22A, and not meant to suggest that the client 16 has multiple destinations. The second-destination 22B may be sent to the system 10 by the client 16 using, for example, a computer or smart-phone, and may be by way of an e-mail, text-message, or information communicated by operating a user specific application, i.e. an app, on a smart-phone or other personal communications device.

Step 115, ACCESS PROFILE OF THE CLIENT, is an optional step that may include accessing a profile 54 of the client 16 to determine if the client 16 has previously agreed to hand-deliver packages. The previous agreement may be based on the client 16 having previously hand-delivered packages, or may be based on a response by the client 16 to questions posed when or before the client sent this instance of a transportation-request 36 requesting transportation to the second-destination 22B.

Step 120, SELECT CLIENT?, may include selecting the client 16 from a group or plurality of possible clients when the client 16 has requested transportation (e.g. sent a transportation-request 36), and one or more packages 14 are ready or waiting for delivery, and optionally when the client 16 has previously agreed to hand-deliver packages. The pre-screening of the client 16 based on prior behavior by the client 16 helps to avoid undesirable delays caused by not having prior information about the client 16. That is, the system 10 (or the controller 30 or the processor 32) may momentarily ignore transportation-requests from potential clients who have indicated that they are not willing to hand-deliver the package 14, and give priority to the client 16 who has indicated that he/she is willing to hand-deliver the package 14. This preferential selection process is indicated in the method 100 when the client 16 is not selected (NO) and the method 100 routes back to step 110 in search of an alternative client.

Step 125, ACCESS DIGITAL-MAP, may include accessing a digital-map 46 to determine a first-time estimate to travel a first-route that travels to the first-destination 22A followed by the second-destination 22B, and determine a second-time estimate to travel a second-route that travels directly to the second-destination 22B without stopping or diverting to the first-destination 22A

Step 130, DETERMINE TRAVEL-DELAY TO DELIVER PACKAGE, may include determining a travel-delay 48 based on a difference or comparison of the first-time and the second-time.

Step 135, DETERMINE WALKING-DISTANCE TO DELIVER PACKAGE, is an optional step that may include accessing a digital-map 46 to determine a walking-distance 56 between the first-destination 22A and where the host-vehicle 12 stops proximate to the first-destination 22A. A walking-time estimate may be added to the travel-delay 48, where the walking time is estimated based on the walking-distance, and optionally a transaction-delay that estimates additional time to, for example, get a signature from the recipient of the package 14.

Step 140, DETERMINE REDUCED-FEE, may include determining the reduced-fee 42 in accordance with the travel-delay 48 and/or determining the reduced-fee 42 in accordance with the walking-distance 56. This step may also include first determining the base-fee 40, and then subtracting a discount-fee from the base-fee 40 to determine the reduced-fee 42. The discount-fee may be based on the added travel time for the client 16 to deliver, i.e. hand-deliver, the package 14. It is contemplated that the prompt delivery of the package 14 may be desired by the shipping company to degree that the discount-fee is greater than the base-fee 40. That is, the reduced-fee 42 may be a negative value whereby the client 16 is paid to deliver the package 14 and the transportation to the second-destination 22B is free.

Step 145, CONVEY BASE-FEE TO CLIENT, may include conveying a base-fee 40 to the client 16 for transportation to the second-destination 22B without stopping at the first-destination 22A by operating the communication-device 20 to, for example but not limited to, display the base-fee on a touch-screen 26 within the host-vehicle 12, or operate the transceiver 24 to transmit the base-fee 40 in a text-message to a smart-phone of the client 16.

Step 150, CONVEY REDUCED-FEE TO CLIENT, may include conveying a reduced-fee 42 to the client 16 for transportation to the second-destination 22B that includes stopping proximate to the first-destination 22A and the client 16 delivering the package 14 to the first-destination 22A by, for example, operating the communication-device 20 in the same manner as used to convey the base-fee 40.

Step 155, RECEIVE AGREEMENT FROM THE CLIENT?, may include sending a request for the client 16 to accept an agreement 44 and receiving the agreement 44 for the reduced-fee 42 from the client 16. The agreement 44 may be indicated by the client 16 touching an icon on the touch-screen 26, or replying to a text-message with an appropriate response. If the client 16 declines the agreement 44, i.e. the client 16 does not want to deliver the package 14 (NO), the method 100 proceed to transport the client 16 to the second-destination 22B without stopping or diverting to the first-destination 22A. However, if the agreement 44 is received (YES), the method proceeds to travel to the first-destination 22A so the package can be hand-delivered by the client 16.

Step 160, STOP PROXIMATE TO FIRST-DESTINATION, may include in response to receiving the agreement 44, operating the vehicle-controls 18 of the host-vehicle 12 to transport the client 16 and stop at a location 58 proximate to the first-destination 22A. As used herein, proximate to generally means as close as possible to the first-destination 22A which may be more precisely describe as the exact spot the package is to be hand-delivered by the client. It is appreciated that the first-destination 22A may merely be an address of a business or residence, and the judgement of the client 16 may be relied upon to determine exactly where the package is to be placed. Alternatively, the first-destination 22A may include delivery instructions in addition to the address. For example, the delivery instructions may specify that the package 14 is to be given to a receptionist at the business associated with the address.

Step 165, WAIT WHILE CLIENT HAND-DELIVERS PACKAGE, may include the host-vehicle 12 waiting, i.e. parking, while the client 16 hand-delivers the package 14 to the first-destination 22A and subsequently returns to the host-vehicle 12.

Step 170, RENDER IMAGE OF DELIVERY, may include rendering an image 52 of the client 16 with a camera 50 while the client 16 hand-delivers the package 14, and storing the image 52 in, for example, the memory 34. As used herein, the image 52 may be a video recording, or a sequence of still photos taken, for example, once per second. Alternatively, the image 54 may be transmitted using the transceiver 24 to the delivery company and stored remotely, e.g. in the cloud.

Step 175, TRANSPORT CLIENT TO SECOND-DESTINATION, may include, transporting the client 16 to the second-destination 22B after the package 14 has been hand-delivered by the client 16 and the client has returned to the host-vehicle 12, or transporting the client 16 directly to the second-destination 22B without stopping or diverting to the first-destination 22A because the client 16 has declined the agreement 44.

Described herein is a first device 30 that includes one or more processors 32; memory 34; and one or more programs 105-140 stored in memory 34. The one or more programs 105-140 including instructions for performing all or part of the method 100. Also, described herein is a non-transitory computer-readable storage-medium 34 that includes one or more programs 105-140 for execution by one or more processors 32 of a first device 30, the one or more programs 105-140 including instructions which, when executed by the one or more processors 32, cause the first device to perform all or part of the method 100.

Accordingly, a transport system (the system 10), a controller 30 for the system 10, and a method 100 of operating the system 10 are provided. The system 10 and the method 100 decrease the cost of package delivery as a full-time employee is not required to transport an instance of the package from the host-vehicle to the first-destination 22A of the package 14. Instead, a client 16 who may be traveling to a second-destination 22B that may be generally in the same direction as the first-destination 22A is offered a reduction in the fare or fee for transportation to the second-destination 22B in exchange for assisting with the delivery of the package by carrying the package the last few meters to the first-destination 22A as the terrain or other features prevent the host-vehicle 12 from traveling all the way to the first-destination 22A.

While this invention has been described in terms of the preferred embodiments thereof, it is not intended to be so limited, but rather only to the extent set forth in the claims that follow.

## Claims

1. A transport system (10), said system (10) comprising:
vehicle-controls (18) operable for automated-control of a host-vehicle (12);
a communication-device (20) operable to receive destinations (22) for the host-vehicle (12) and convey fees to a client (16); and
a controller-circuit (30) in communication with the vehicle-controls (18) and the communication-device (20), said controller-circuit (30) configured to
receive a first-destination (22A) of a package (14);
receive a second-destination (22B) of the client (16);
convey a base-fee (40) to the client (16) for transportation to the second-destination (22B) without stopping at the first-destination (22A);
convey a reduced-fee (42) to the client (16) for transportation to the second-destination (22B) that includes stopping proximate to the first-destination (22A) and the client (16) delivering the package (14) to the first-destination (22A);
receive an agreement (44) for the reduced-fee (42) from the client (16); and
in response to receiving the agreement (44), operate the vehicle-controls (18) of the host-vehicle (12) to transport the client (16) and stop at a location (58) proximate to the first-destination (22A), then wait while the client (16) hand-delivers the package (14) to the first-destination (22A), and then transport the client (16) to the second-destination (22B).

2. The system (10) in accordance with claim 1, wherein the system (10) includes a digital-map (46); and the controller-circuit (30) is configured to access the digital-map (46) to determine the reduced-fee (42) in accordance with a travel-delay (48) caused by delivering the package (14).

3. The system (10) in accordance with any of the previous claims, wherein the system (10) includes a digital-map (46); and the controller-circuit (30) is configured to access the digital-map (46) to determine the reduced-fee (42) in accordance with a walking-distance (56) between the first-destination (22A) and where the host-vehicle (12) stops proximate to the first-destination (22A).

4. The system (10) in accordance with any of the previous claims, wherein the system (10) includes a camera (50) operable to render an image (52) of the client (16) while the client (16) hand-delivers the package (14); and the controller-circuit (30) is configured to store the image (52).

5. The system (10) in accordance with any of the previous claims, wherein the system (10) includes a profile (54) of the client (16), wherein the profile (54) indicates that the client (16) has previously agreed to hand-deliver packages (14); and the controller-circuit (30) is configured to select the client (16) when the client (16) has requested transportation and one or more packages (14) are ready for delivery.

6. A controller-circuit (30) for a transport system (10), said controller-circuit (30) comprising:
a first-port (30A) configured to communicate with vehicle-controls (18) operable for automated-control of a host-vehicle (12);
a second-port (30B) configured to communicate with a communication-device (20) operable to receive destinations (22) for the host-vehicle (12) and convey fees to a client (16); and
a processor (32) in communication with the vehicle-controls (18) and the communication-device (20), said processor (32) to
receive a first-destination (22A) of a package (14);
receive a second-destination (22B) of the client (16);
convey a base-fee (40) to the client (16) for transportation to the second-destination (22B) without stopping at the first-destination (22A);
convey a reduced-fee (42) to the client (16) for transportation to the second-destination (22B) that includes stopping proximate to the first-destination (22A) and the client (16) delivering the package (14) to the first-destination (22A);
receive an agreement (44) for the reduced-fee (42) from the client (16); and
in response to receiving the agreement (44), operate the vehicle-controls (18) of the host-vehicle (12) to transport the client (16) and stop at a location (58) proximate to the first-destination (22A), then wait while the client (16) hand-delivers the package (14) to the first-destination (22A), and then transport the client (16) to the second-destination (22B).

7. The controller-circuit (30) in accordance with claim 6, wherein the controller-circuit (30) includes a third-port (30C) configured to communicate with a digital-map (46); and the processor (32) is configured to access the digital-map (46) to determine the reduced-fee (42) in accordance with a travel-delay (48) caused by delivering the package (14).

8. The controller-circuit (30) in accordance with any of the previous claims, wherein the controller-circuit (30) includes a third-port (30C) configured to communicate with a digital-map (46); and the processor (32) is configured to access the digital-map (46) to determine the reduced-fee (42) in accordance with a walking-distance (56) between the first-destination (22A) and where the host-vehicle (12) stops proximate to the first-destination (22A).

9. A method (100) to operate a transport system (10), said method (100) comprising:
receiving a first-destination (22A) of a package (14);
receiving a second-destination (22B) of a client (16);
conveying a base-fee (40) to the client (16) for transportation to the second-destination (22B) without stopping at the first-destination (22A);
conveying a reduced-fee (42) to the client (16) for transportation to the second-destination (22B) that includes stopping proximate to the first-destination (22A) and the client (16) delivering the package (14) to the first-destination (22A);
receiving an agreement (44) for the reduced-fee (42) from the client (16); and
in response to receiving the agreement (44), operating the vehicle-controls (18) of the host-vehicle (12) to transport the client (16) and stop at a location (58) proximate to the first-destination (22A), then wait while the client (16) hand-delivers the package (14) to the first-destination (22A), and then transport the client (16) to the second-destination (22B).

10. The method (100) in accordance with claim 9, wherein the method (100) includes acc
essing a digital-map (46) to determine a travel-delay (48) caused by delivering the package (14); and
determining the reduced-fee (42) in accordance with the travel-delay (48).

11. The method (100) in accordance with any of the previous claims, wherein the method (100) includes
accessing a digital-map (46) to determine a walking-distance (56) between the first-destination (22A) and where the host-vehicle (12) stops proximate to the first-destination (22A); and
determining the reduced-fee (42) in accordance with the walking-distance (56).

12. The method (100) in accordance with any of the previous claims, wherein the method (100) includes
rendering an image (52) of the client (16) with a camera (50) while the client (16) hand-delivers the package (14); and
storing the image (52).

13. The method (100) in accordance with any of the previous claims, wherein the method (100) includes
accessing a profile (54) of the client (16) to determine if the client (16) has previously agreed to hand-deliver packages (14); and
selecting the client (16) when the client (16) has requested transportation and one or more packages (14) are ready for delivery.

14. A first device (30) comprising:
one or more processors (32);
memory (34); and
one or more programs (105-175) stored in memory (34), the one or more programs (105-175) including instructions for performing the method (100) of any one of claims 9-13.

15. A non-transitory computer-readable storage-medium (34) comprising one or more programs (105-175) for execution by one or more processors (32) of a first device (30), the one or more programs (105-175) including instructions which, when executed by the one or more processors (32), cause the first device (30) to perform the method (100) of any one of claims 9-13.
